# EUROPÄISCHE PATENTANMELDUNG

(11) **EP 1 277 390 A1**
(43) Veröffentlichungstag der Anmeldung: **22.01.2003**
(21) Anmeldenummer: 02016096.6
(22) Anmeldetag: 19.07.2002
(51) Int. Cl.: A01D 45/02

(54) **Erntegerät für stengelartiges Erntegut**

(30) Priorität: 19.07.2001 DE 10135128
(71) Anmelder: Maschinenfabrik Bernard Krone GmbH, 48480 Spelle (DE)
(72) Erfinder: Krone, Bernard, Dr., 48480 Spelle (DE); Horstmann, Josef, 49479 Ibbenbüren (DE); Keller, Alfons, 49497 Mettingen (DE)
(74) Vertreter: Pott, Ulrich, Dipl.-Ing.

(57) **Zusammenfassung**

Die Erfindung bezieht sich auf ein Erntegerät 1 zum Ernten von Mais oder dergleichen stengelartigem Erntegut, wobei das Erntegerät 1 zumindest einen umlaufenden Endlosförderer 10, 11 für aufgenommenes Erntegut umfaßt, der endseitig einen Zuführungsbereich des Erntegutes zu einer Eintrittsöffnung einer Weiterverarbeitungseinrichtung, insbesondere eines Häckslers ausbildet, wobei der Endlosförderer 10, 11 Schneidmittel 26 und oberhalb der Schneidmittel 26 vorgesehene Haltemittel 23 aufweist und dem Endlosförderer 10, 11 zumindest ein Blatt- und Pflanzenheber 13, 14, 15 zur Unterstützung der Zuführung des stengelartigen Erntegutes zugeordnet ist. Um die Erntegutaufnahme weiter zu optimieren, ist unterhalb der Schneidmittel 26 des Endlosförderers 10, 11 eine Reinigungsvorrichtung zur Beseitigung von Ablagerungen von Erntegut und Erntegutresten an Teilen eines Blatt- und Pflanzenhebers 13 vorgesehen (Fig. 1).

## Beschreibung

Die Erfindung bezieht sich auf ein Erntegerät zum Ernten von Mais oder dergleichen stengelartigem Erntegut in einer Ausbildung nach dem Oberbegriff des Patentanspruches 1. Ein derartiges als Vorsatzgerät für einen Feldhäcksler vorgesehenes Erntegerät dient zum Aufnehmen, Abschneiden und dem Überführen von beispielsweise Maispflanzen an eine Weiterverarbeitungsvorrichtung.

Aus der DE 33 24 899 C2 ist eine Maschine zum Ernten von stengelartigem Erntegut bekannt, bei der das Erntegut von einer Förder- und Schneideinrichtung aufgenommen, abgeschnitten und einer Häckseleinrichtung zugeführt wird. Die Förder- und Schneideinrichtung weist ein quer zur Fahrtrichtung umlaufendes Kettensystem auf. Das Kettensystem besteht dabei aus üblichen, übereinanderliegenden, endlosen und durch Umlenkräder geführten Langglieder-Rollenketten, denen Haltefinger mit Gegenhaltern und mit einem feststehenden Schneidmesser zusammenwirkende Gegenschneiden zum Abschneiden und Führen der stengelartigen Maispflanzen zugeordnet sind. Um eine zuverlässige Führung der stengelartigen Maispflanzen nach dem Abschneiden zu erreichen, ist eine Anbringung von Haltefingern und Gegenhaltern vorgese-hen, so daß eine Maispflanze durch die gleichzeitige Anlage am Haltefinger und an dem Gegenhalter in einer gegenüber der Senkrechten leicht geneigten Stellung der Häckseleinrichtung zugeführt werden kann. Im Betrieb bereiten dabei allerdings die langen Glieder-Rollenketten wegen ihrer Verschleißanfälligkeit Probleme.

Aus der PCT/EP00/06885 ist ein Erntegerät der eingangs genannten Art bekannt, bei der zunächst durch die Schneidmittel eine erste Schneidebene definiert ist und darüber hinaus eine darüberliegende Halteebene für die Ernteguthalme. Die den Schneid- und Haltemitteln zugewandte Vorderseite des Endlosförderers ist dabei im wesentlichen geschlossen ausgebildet, wobei zur Unterstützung des Endlosförderers bei der Zuführung des stengelartigen Erntegutes an eine Verarbeitungseinrichtung Blatt- und Pflanzenheber vorgesehen sind, welche im wesentlichen aus einer pyramidenförmigen Teilerspitze und einem Führungsbügel bestehen. Dabei sind die Führungsbügel so geformt, daß diese zunächst in etwa parallel zu einem Arbeitstrum des Endlosförderers verlaufen und bis auf einen zum Passieren des stengelartigen Erntengutes erforderlichen Abstand an die Umlaufrichtung nächsten Blatt- und Pflanzenheber heranreichen. In einem Seitenbereich des Endlosförderers sind darüber hinaus noch antreibbare, den Halm- und Pflanzenheber zugeordnete und mit einem Schnekkengang versehene Lagermaisschnecken vorgesehen, um den Einzugs- und Fördervorgang weiter zu unterstützen. Dieses Erntegerät arbeitet zwar durchaus zufriedenstellend, verursacht jedoch in bestimmten Betriebszuständen Ansammlungen von Erntegut und Erntegutresten im Bereich von Blatt- und Pflanzenhebern.

Es ist Aufgabe der vorliegenden Erfindung, ein Erntegerät der eingangs genannten Art weiter zu optimieren.

Zur Lösung dieser Aufgabe zeichnet sich das Erntegerät der eingangs genannten Art dadurch aus, daß der Schneidmittel des Erntegutförderers eine Reinigungsvorrichtung zur Beseitigung von Ablagerungen von Erntegut oder Entegutresten an Teilen eines Blatt- und Pflanzenhebers vorgesehen ist.

Damit ist ein Erntegerät zur Verfügung gestellt, bei dem auch Ablagerungen von Erntegut oder Erntegutresten im Bereich von Blatt- und Pflanzenhebern bzw. Teilen von Blatt- und Pflanzenhebern wirksam zu vermeiden sind. Ansonsten kann die Erntemaschine nach der Erfindung völlig analog gestaltet sein wie in der PCT/EP00/06885-Patentanmeldung beschrieben, und u.a. eine im wesentlichen geschlossene Vorderseite des Endlosförderers aufweisen, so daß sich durch diese gekapselte Baueinheit eine negative Beeinflussung durch Pflanzen oder Bodenreste im Bereich des Endlosförderers wirksam vermeiden läßt. Ebenfalls ist es möglich, insgesamt Schneid- und Halteebenen derart vorzusehen, daß diese übereinander ausgebildet sind, so daß abgetrennte Halme in einer nahezu senkrechten Stellung quer zu ihrer Erstreckung transportiert werden, wobei auch der Raum zwischen Halteebenen geschlossen sein kann, so daß auch keine Blätter, die sich etwa im unteren Bereich von den Halmen auswärts erstrecken, in z.B. eine Kette des Endlosförderers eindringen können. Da nun auch im Bereich von Blatt- und Pflanzenhebern die Ablagerungen von Erntegut bzw. Pflanzenresten zu vermeiden ist, ist damit eine optimale Erntegutaufnahme gewährleistet. Auch herabfallendes Erntegut ist von der Reinigungsvorrichtung als unterhalb der Schneidmittel gelegene Auffangeinheit sicher zu erfassen und auszubringen.

Bevorzugtermaßen ist die Reinigungsvorrichtung als eine in Rotationsbewegung versetzbare Förderschnecke ausgebildet. Diese kann eine Förderronde aufweisen, die sich bis hin zu ihren beiden Endbereichen erstreckt. Bevorzugtermaßen erstreckt sich die Reinigungsvorrichtung entlang der Längserstrekkung des Endlosförderers. Es ist jedoch auch möglich, Förderrondenabschnitte nur im Bereich von Blatt- und Pflanzenhebern vorzusehen.

Teile von Blatt- und Pflanzenhebern, insbesondere deren Halter, sind zweckmäßigerweise derart ausgebildet, daß die Reinigungsvorrichtung in einer ausgeformten Mulde eines Halters gelegen ist, so daß der Halter die Reinigungsvorrichtung bereichsweise umgreift und damit im Bereich der Blatt- und Pflanzenheber einen Gehäusemantel für die Reinigungsvorrichtung darbietet. Dadurch ist ein sicheres Erfassen von etwaigen Erntegutresten bzw. Erntegutablagerungen zu vollziehen. Bereichsweise können Halter von Blatt- und Pflanzhebern auch derart ausgebildet sein, daß sich ein Bereich bodenparallel erstreckt und sich V-förmig nach hinten, d.h. hin zum Erntegerät erweitert und nach oben verläuft, so daß sich eine etwa V-förmig nach oben auseinandergehende Erhebung ergibt, die darüber hinaus neben ihrer Gehäusefunktion als Gehäusemulde auch noch die Aufgabe übernehmen kann, Anschraubflächen zum Anbau an einen Rahmen des Erntegerätes zu bilden.

Sind die Schneidmittel des Erntegerätes als stufenförmig ausgebildete Schneidmesser ausgebildet, ist damit der Schneidvorgang durch die Reinigungsvorrichtung auch noch wirksam zu unterstützen und die Zuführung weiterhin zu optimieren.

Weitere Vorteile der Erfindung ergeben sich aus weiteren Unteransprüchen, der nachfolgenden Beschreibung und der Zeichnung. In der Zeichnung zeigen:
- Fig. 1: eine perspektivische Darstellung eines erfindungsgemäßen Erntege-rätes mit zwei Einzugs- und Fördereinrichtungen, die spiegelbildlich zueinander ausgebildet sind;
- Fig. 2: eine vergrößerte, teilweise abgebrochene Darstellung der Einzelheit X in Fig. 1;

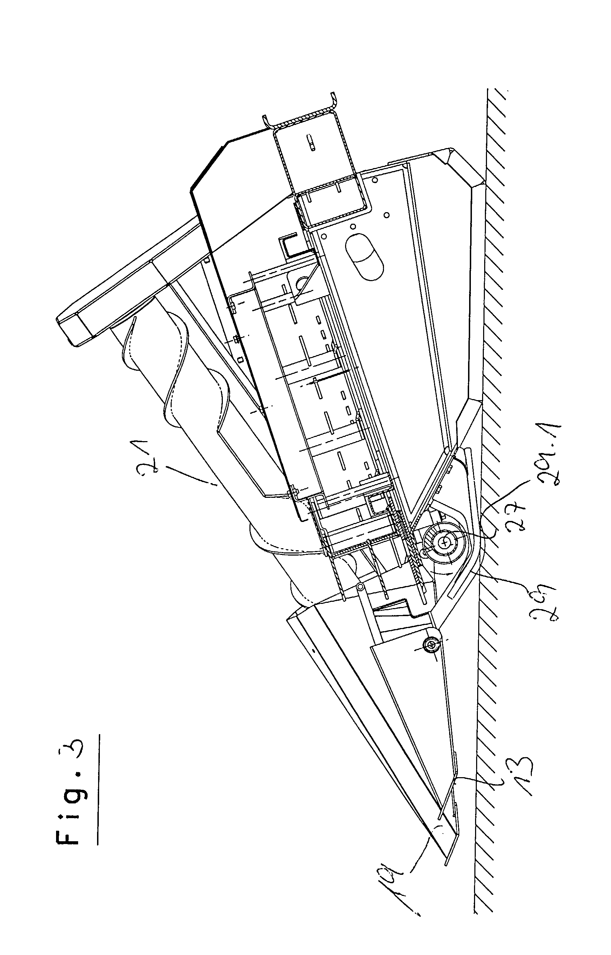

- Fig. 3: einen Schnitt gemäß der Schnittlinie III-III in Fig. 1;
- Fig. 4: eine Ansicht von unten auf das Ausführungsbeispiel nach Fig. 1 (teilweise abgebrochen), und
- Fig. 5: eine perspektivische Ansicht eines Blatt- und Pflanzenhebers des Ausführungsbeispiels nach Fig. 1.

In der Zeichnung sind allgemein gleichwirkende Teile mit gleichen Bezugsziffern versehen.

Das in der Zeichnung veranschaulichte Erntegerät kann als Vorsatzgerät 2 für eine mobile Verarbeitungseinrichtung S in der Art eines Häckslers zum reihenabhängigen oder reihenunabhängigen Ernten von stengelartigem Erntegut wie Mais oder dergleichen eingesetzt werden.

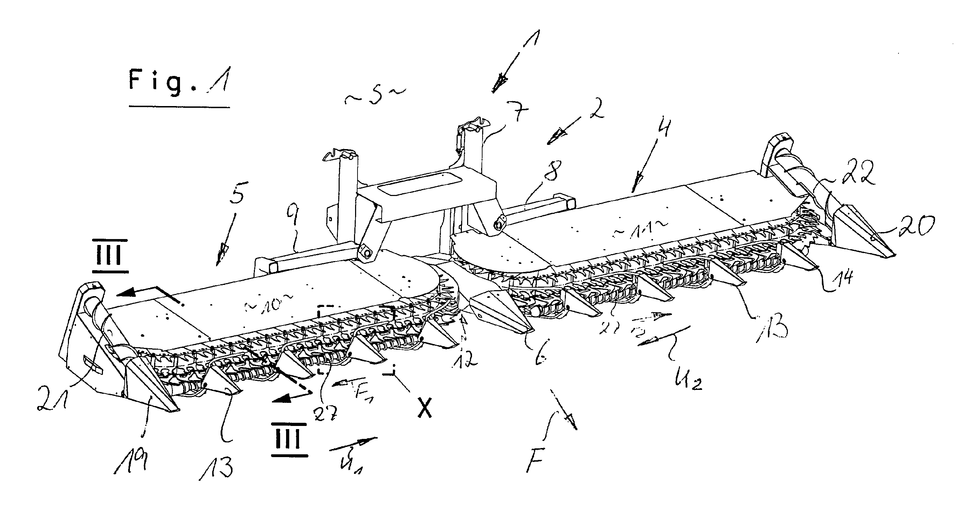

Das Erntegerät gemäß Fig. 1 besteht aus zumindest einer und vorzugsweise - wie dargestellt - aus zwei in der längsten Ausrichtung quer zur Fahrt- und Arbeitsrichtung F ausgerichteten, zueinander spiegelbildlich ausgeführten Einzugs- und Fördereinrichtungen 4, 5, die so nebeneinander angeordnet sind, daß ein durchgehender Erntegutstreifen mit großer Arbeitsbreite abgeerntet werden kann. Zwischen den Einzugs- und Fördereinrichtungen 4, 5 befindet sich eine mittlere Teilerspitze 6 zur Aufteilung des zu bearbeitenden Erntegutstreifens auf die Einzugs- und Fördereinrichtungen 4, 5. Zur Aufhängung des Erntegerätes 1 an einer Verarbeitungseinrichtung S ist ein Tragrahmen 7 vorgesehen, der schwenkbar angelenkte Tragrahmen 8, 9 umfaßt. Mit Hilfe dieser Tragarme 8, 9 können die Einzugs- und Fördereinrichtungen 4, 5 aus der in Fig. 1 dargestellten Arbeits- und Betriebsstellung in eine Transportstellung überführt werden, in der sie eine etwa vertikal ausgerichtete, hochgeklappte Stellung mit einer geringen Transportbreite einnehmen.

Das Erntegerät hat in dem gezeigten Ausführungsbeispiel für jede Einzugs- und Fördereinrichtung 4, 5 jeweils einen umlaufenden Endlosförderer 10, 11, welcher nahe einem Abgabe- und Übergabebereich 12 des jeweiligen Endlosförderers 10, 11 an die Weiterverarbeitungseinrichtung, etwa einen Häcksler, an einem äußeren Umlenkbereich antreibbar ist. Die Umlaufrichtung der Endlosförderer 10, 11 ist mit U1 und U2 bezeichnet, verläuft in etwa quer zur Fahrtrichtung F und ist zur Mitte des Erntegerätes 1 hin gerichtet.

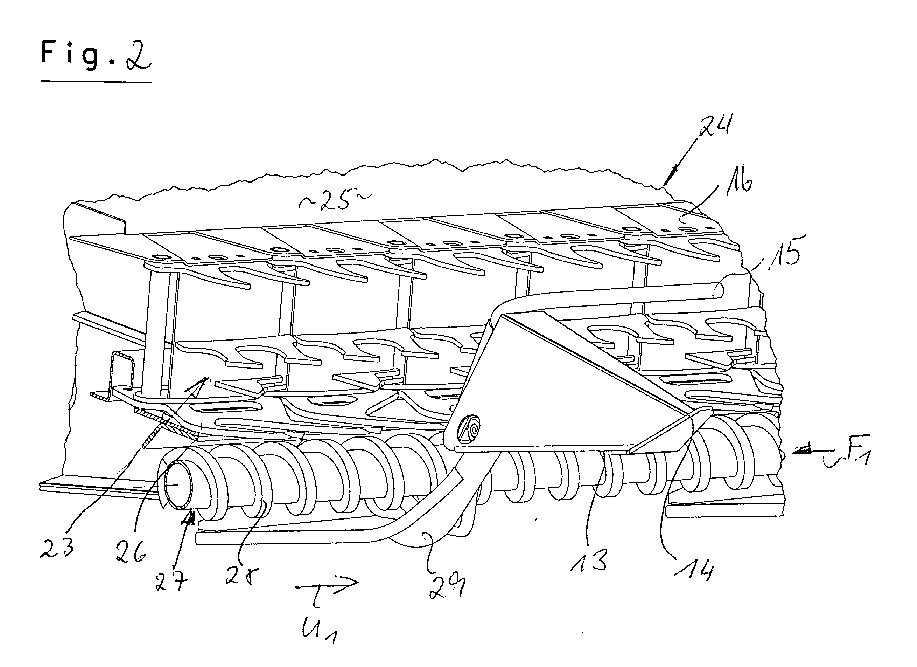

Wie weiterhin den Figuren 1, 2, 4 und 5 zu entnehmen ist, weist jede Einzugsund Fördereinrichtung 4, 5 zum einen zur Erleichterung der Ernte von liegendem oder teilweise liegendem stengelartigem Erntegut und zum anderen als Unterstützung der Endlosförderer 10, 11 bei der Zuführung des stengelartigen Erntegutes an die Verarbeitungseinrichtung Blatt- und Pflanzenheber 13 auf, welche im wesentlichen aus einer pyramidenförmigen Teilerspitze 14 und einem Führungsbügel 15 (Fig. 2) bestehen. Dabei sind die Führungsbügel 15 so geformt, daß diese zunächst in etwa parallel zu einem Arbeitstrum 16 der Endlosförderer 10, 11 verlaufen und bis auf einen zum Passieren des stengelartigen Erntegutes erforderlichen Abstand an die in Umlaufrichtung U1, U2 nächsten Blatt- und Pflanzenheber 13 heranreichen.

Jeder Einzugs- und Fördereinrichtung 4, 5 ist darüber hinaus ein Halm- und Pflanzenteiler 19, 20 mit nachgeordneten Lagermaisschnecken 21, 22 als Trennelement zwischen dem zu bearbeitenden und stehenbleibendem Erntegut zugeordnet.

Wie insbesondere auch aus Fig. 2 näher hervorgeht, hat ein erfindungsgemäßer Endlosförderer 10, 11 eine Vielzahl von aneinander gereihten Fördergliedern 23, welche ein flexibles Fördersystem 24 darstellen, welches entlang unterschiedlicher Bewegungsbahnen geführt sein kann. Im dargestellten Ausführungsbeispiel werden die Förder- und Führungsglieder 23 des flexiblen Fördersystems 24 im Arbeitstrum 25 entlang einer geradlinig ausgebildeten Bewegungsbahn geführt. Zudem sind Schneidmittel 26 vorgesehen, die aus Verschleißgründen leicht auswechselbar sein sollten.

Unterhalb der Schneidmittel 26 ist eine als Förderschnecke 27 ausgebildete Reinigungsvorrichtung für Ablagerungen von Erntegut und Erntegutresten vorgesehen. Diese Förderschnecke 27 ist derart antreibbar, daß sie entgegen der Förderrichtung U1, U2 in dem Ausführungsbeispiel (Fig. 2) in Richtung der Förderrichtung F1, F2 fördert. Sie hat auf ihrem Mantel eine Förderronde 28, die sich bis zu den jeweiligen Endbereichen der Förderschnecke erstreckt.

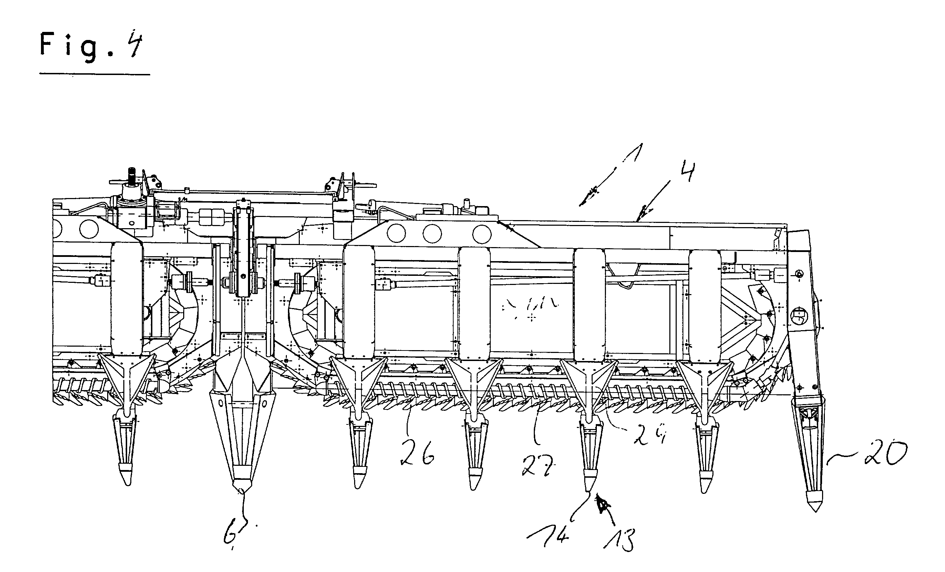

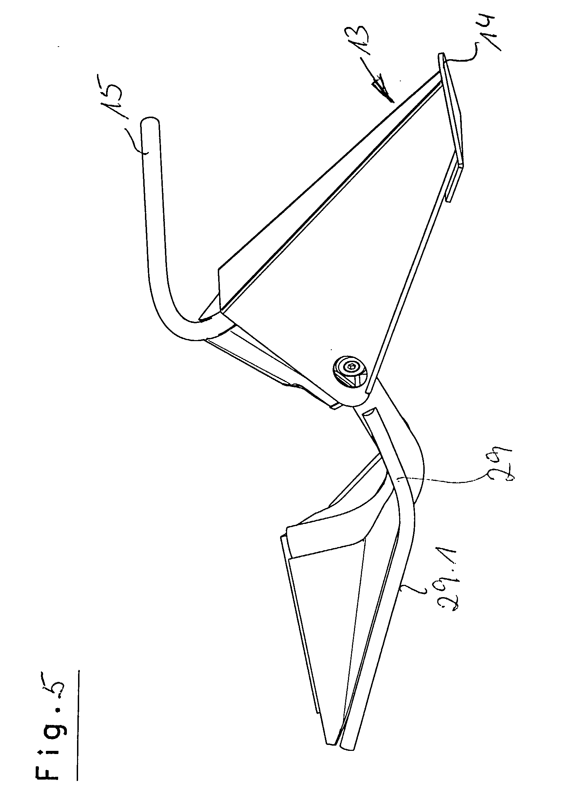

Die Förderschnecke 27 hat eine Förderronde 28, die durch ein kantiges Profil ausgebildet ist. Der Blatt- und Pflanzenheber 13 seinerseits hat einen Halter 29, der die Reinigungsvorrichtung zumindest bereichsweise umgreift, und zwar in dem gezeigten Ausführungsbeispiel derart, daß er die Förderschnecke 27 nach Art einer ausgeformten Mulde (Fig. 5) untergreift und seinerseits einen Gehäusemantelbereich ausbildet. Mit einem Teilbereich 29.1 erstreckt er sich bereichsweise bodenparallel und erweitert sich V-förmig zum Erntegerät nach hinten und auch nach oben hin (Fig. 4 und Fig. 5) und bietet dadurch auch noch Anschraubflächen zum Anbau an einen Rahmen des Erntegerätes.

Hauptvorteil der Reinigungsvorrichtung ist, daß Blatt- und Pflanzenheberteile, insbesondere Halter 29, von Erntegut und Erntegutresten frei zu halten sind, wobei durch die im Ausführungsbeispiel gewählte muldenförmige, die Förderschnecke 27 bereichsweise umgreifende Gestaltung 29.1 eines Halters 29, die Förder- und Reinigungswirkung unterstützt und zwar sowohl für vor der Schnecke befindliches Erntegut als auch für Erntegutstengel, die bereits teilweise eingezogen sind.

Durch ein kantiges Profil der Förderronde 29der Förderschnecke 27 ist eine aggressive Reinigungswirkung zu erzielen. Es sind selbstverständlich jedoch auch andere Profilgestaltungen möglich. Durch eine bodenparallele Ausrichtung der hinteren äußeren Bereiche der Halterung und die flächige Ausbildung des Halters 29 unterhalb der Förderschnecke 27 wird die Reinigungswirkung zusätzlich unterstützt, indem Stengelteile sich mit bodennahen Pflanzen und Wurzeln verhaken und dadurch von den Haltern 29 der Blatt- und Pflanzenheber 13 entfernt werden. Die V-förmige Erhebung 29.2 wirkt dabei wie ein Räumschild.

## Patentansprüche

1. Erntegerät (1) zum Ernten von Mais oder dergleichen stengelartigem Erntegut, wobei das Erntegerät (1) zumindest einen umlaufenden Endlosförderer (10,11) für aufgenommenes Erntegut umfaßt, der endseitig einen Zuführungsbereich des Erntegutes zu einer Eintrittsöffnung einer Weiterverarbeitungseinrichtung, insbesondere eines Häckslers, ausbildet, wobei der Endlosförderer (10,11) Schneidmittel (26) und oberhalb der Schneidmittel (26) vorgesehene Haltemittel (23) aufweist und dem Endlosförderer (10,11) zumindest ein Blatt- und Pflanzenheber (13) zur Unterstützung der Zuführung des stengelartigen Ernteguts zugeordnet ist, **dadurch gekennzeichnet, daß** unterhalb der Schneidmittel (26) des Endlosförderers (10,11) eine Reinigungsvorrichtung zur Beseitigung von Ablagerungen von Erntegut und Erntegutresten an Teilen eines Blatt- und Pflanzenheber (13) vorgesehen ist.

2. Erntegerät nach Anspruch 1, **dadurch gekennzeichnet, daß** die Reinigungsvorrichtung als in Rotationsbewegung versetzbare Förderschnecke (27) ausgebildet ist.

3. Erntegerät nach Anspruch 2, **dadurch gekennzeichnet, daß** die Förderschnecke (27) mit zu der Förderrichtung (U1, U2) des Endlosförderers (10,11) gegensinniger Förderbewegung (F1, F2) antreibbar ist.

4. Erntegerät nach einem der Ansprüche 1 bis 3, **dadurch gekennzeichnet, daß** die Reinigungsvorrichtung bereichsweise von Teilen des Blatt- und Pflanzenhebers (13) umgriffen ist.

5. Erntegerät nach Anspruch 4, **dadurch gekennzeichnet, daß** der Blatt- und Pflanzenheber einen Halter (29) aufweist, der die Reinigungsvorrichtung zumindest bereichsweise untergreift.

6. Erntegerät nach Anspruch 5, **dadurch gekennzeichnet, daß** sich der Halter (29) des Blatt- und Pflanzenhebers (13) in seiner Arbeitsstellung bereichsweise im wesentlichen bodenparallel erstreckt und die Reinigungsvorrichtung in ihren dem Erdboden zugewandten Bereichen bogenförmig umgreift.

7. Erntegerät nach Anspruch 5 oder 6, **dadurch gekennzeichnet, daß** sich der Halter(29) zu seinen dem Endlosförderer (10, 11) zugewandten Bereichen erweitert und eine etwa V-förmig auseinandergehende Erhebung (29.2) aufweist, die Anschraubflächen zum Anbau an einen Rahmen des Erntegerätes hat.

8. Erntegerät nach einem der Ansprüche 2 bis 7, **dadurch gekennzeichnet, daß** sich die Förderschnecke (27) parallel zum Endlosförderer (10, 11) bis hin zu seinen Endbereichen erstreckt und zumindest im Bereich eines Blatt- und Pflanzenhebers (13) eine Förderronde (28) aufweist.

9. Erntegerät nach einem der Ansprüche 1 bis 7, **dadurch gekennzeichnet, daß** sich die Förderschnecke (27) im wesentlichen parallel zum Endlosförderer (10, 11) bis zu seinem Endbereich erstreckt und über ihre gesamte Länge eine Förderronde (28) aufweist.

10. Erntegerät nach Anspruch 8 oder 9, **dadurch gekennzeichnet, daß** die Förderronde (28) als kantiges Profil ausgebildet ist.

11. Erntegerät nach einem der Ansprüche 1 bis 10, **dadurch gekennzeichnet, daß** die oberhalb der Reinigungsvorrichtung vorgesehenen Schneidmittel (26) als stufenförmige Schneidmesser ausgebildet sind.

12. Erntegerät nach Anspruch 11, **dadurch gekennzeichnet, daß** die Förderschnecke (27) so angeordnet ist, daß sich ihre Reinigungswirkung auf die stufenförmigen Schneidmesser entfaltet.
